(19) Europäisches Patentamt
European Patent Office
Office européen des brevets

(11) **EP 1 306 835 A1**

(12) **DEMANDE DE BREVET EUROPEEN**

(43) Date de publication:
**02.05.2003 Bulletin 2003/18**

(51) Int Cl.[7]: **G11B 7/09**

(21) Numéro de dépôt: **02354160.0**

(22) Date de dépôt: **16.10.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **17.10.2001 FR 0113372**

(71) Demandeur: **STMicroelectronics S.A.**
**92120 Montrouge (FR)**

(72) Inventeur: **Simeoni, Patrick**
**38000 Grenoble (FR)**

(74) Mandataire: **de Beaumont, Michel**
**1, rue Champollion**
**38000 Grenoble (FR)**

(54) **Procédé et circuit de mesure numérique de la phase d'un signal sinusoidal**

(57)    L'invention concerne un procédé pour mesurer avec une erreur maximale E la phase d'un signal sensiblement sinusoïdal de pulsation $\omega = 2\pi/T$, échantillonné avec une période d'échantillonnage T/r dans lequel on calcule la phase comme l'instant auquel une droite passant par deux échantillons consécutifs situés de part et d'autre d'une valeur médiane du signal atteint ladite valeur, comprenant l'étape consistant à sélectionner le nombre r dans une fourchette comprise entre une valeur r0 et une valeur égale à deux à trois fois la valeur r0 telle que :

$$E \geq \max_{t \in \left[\frac{-T}{r0}, 0\right]} \left[ t - \frac{T}{r0} \cdot \frac{round(G \cdot \sin \omega t)}{round\left(\sin\left[G \cdot \omega \cdot t + \frac{2\pi}{r0}\right]\right) - round(G \cdot \sin \omega t)} \right]$$

round(x) étant l'entier le plus proche d'un réel x et G étant égal à $2^i G_1$, où i est le nombre de bits sur lequel sont codés les échantillons et $G_1$ est un terme de correction d'amplitude du signal échantillonné.

Fig 5

EP 1 306 835 A1

**Description**

La présente invention concerne la mesure numérique de la phase d'un signal analogique, et en particulier d'un signal sensiblement sinusoïdal à fréquence variable produit par un dispositif de lecture d'un disque optique.

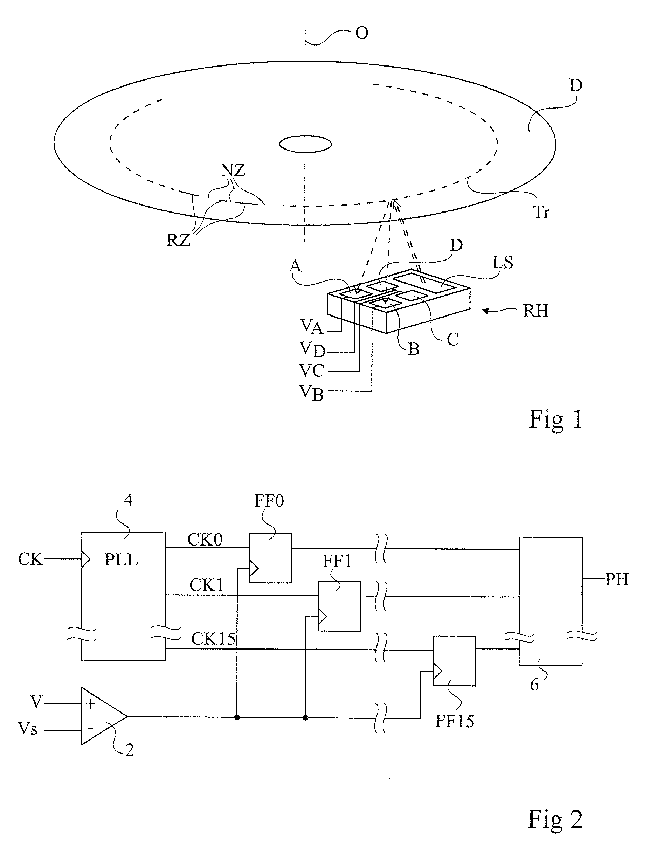

La figure 1 représente très schématiquement un lecteur de disque laser ou disque optique. Un disque D, sur une face duquel est gravé un sillon Tr, est maintenu en rotation autour de l'axe O de révolution du disque. Le sillon Tr forme une spirale centrée sur l'axe O, composée d'une suite d'alternances de zones réfléchissantes RZ et non réfléchissantes NZ. Le sillon peut également former des cercles concentriques selon un mode de réalisation qui ne sera pas décrit par la suite. La longueur des alternances de zones réfléchissantes et non réfléchissantes est variable et permet un codage d'informations sur le sillon. Le lecteur de disque comporte une tête de lecture RH disposée en regard de la face gravée du disque. Une source de lumière LS située sur la tête de lecture illumine un point du sillon Tr. La tête de lecture RH est mobile radialement par rapport au disque de telle manière que tout point du sillon puisse être illuminé. Quatre cellules photosensibles A, B, C et D sont disposées sur la tête de lecture de manière à recevoir de la lumière réfléchie par le sillon. Lorsque la tête de lecture est alignée avec le sillon, les quatre cellules photosensibles produisent des signaux de tension $V_A$, $V_B$, $V_C$ et $V_D$ identiques en amplitude et en phase. Ces signaux de tension suivent sensiblement une sinusoïde dont la fréquence varie avec la longueur des alternances de zones réfléchissantes et non réfléchissantes du sillon. La fréquence F de ces signaux varie entre une fréquence maximale Fmax pour une longueur minimale des alternances, et une fréquence minimale Fmin pour une longueur maximale des alternances. L'analyse des variations de la fréquence des signaux de tension $V_A$, $V_B$, $V_C$ et $V_D$ permet de retrouver les informations codées sur le sillon Tr. Lorsque par contre la tête de lecture est décalée par rapport au sillon, les cellules photosensibles produisent des signaux de tension $V_A$, $V_B$, $V_C$ et $V_D$ d'amplitude différente et déphasés. Le déphasage des signaux de tension est alors mesuré et fourni à un moyen de commande de la position radiale de la tête de lecture (non représenté) qui agit de manière à réaligner la tête de lecture sur le sillon. Le moyen de commande de la position de la tête de lecture peut être réalisé sous la forme d'un circuit analogique ou numérique. On s'intéresse par la suite au cas où ce circuit de commande utilise une mesure numérique du déphasage des signaux de tension produits par les cellules photosensibles.

La figure 2 représente schématiquement un dispositif classique utilisé pour mesurer la phase PH d'un signal de tension V, produit par l'une des cellules photosensibles A, B, C et D pour numériser cette phase à la fréquence d'un signal d'horloge CK. Un dispositif semblable est prévu pour mesurer la phase du signal de tension produit par les autres cellules photosensibles. Des moyens non représentés permettent de soustraire les deux phases ainsi mesurées. Un comparateur de tension 2 compare le signal V et une valeur Vs sensiblement égale à la valeur moyenne du signal V. Une boucle à verrouillage de phase 4 reçoit le signal d'horloge CK et produit seize répliques CK0, CK1, ... CK15 du signal d'horloge CK, mutuellement décalées de 1/16ème de la période du signal d'horloge CK. Seize bascules D FF0, FF1, ... FF15, cadencées chacune par la sortie du comparateur 2, reçoivent respectivement en entrée l'une des répliques CK0, CK1, ... CK15 produites par la boucle à verrouillage de phase 4. Un bloc logique 6 reçoit les sorties des bascules FF0, FF1, ... FF15 et produit en réponse un signal de phase PH codé sur quatre bits.

Chaque fois que le signal V atteint la valeur Vs, le comparateur 2 cadence les bascules D FF0 à FF15. Chaque bascule D FF0 à FF15 produit alors un signal égal à 1 ou à 0 selon que la réplique CK0 à CK15 qu'elle reçoit est égale à 0 ou à 1. Les répliques CK0 à CK15 étant chacune décalées de 1/16ème de la période du signal d'horloge CK, un traitement logique des signaux produits par les bascules D FF0 à FF15 permet de déterminer, avec une précision de 1/16ème de la période du signal d'horloge CK, à quel instant après le début d'une période du signal d'horloge CK le signal V a atteint la valeur Vs.

Un tel dispositif fonctionne de manière satisfaisante mais il nécessite l'utilisation d'une boucle à verrouillage de phase, ou d'une structure analogique semblable, pour produire les répliques CK0 à CK15 du signal d'horloge CK. Quand on réalise un tel dispositif sous la forme d'un circuit intégré, il peut subir d'importantes modifications pour tout changement du processus de fabrication, ce qui n'est pas souhaitable. En outre, une telle structure analogique est difficile à tester, et elle doit être évaluée après fabrication, ce qui est coûteux.

Pour éviter ces inconvénients, il paraît souhaitable de prévoir un procédé numérique de mesure de la phase d'un signal. Un procédé numérique consiste à échantillonner le signal dont on veut mesurer la phase et à déterminer cette phase à partir des échantillons ainsi obtenus. Classiquement, un tel procédé implique d'utiliser des moyens de calcul ou des tables qui occupent une surface de silicium importante. On peut aussi utiliser des algorithmes dans lesquels on assimile le signal échantillonné à une droite entre deux échantillons consécutifs. Ces algorithmes permettent de réaliser des circuits plus simples, mais il est généralement admis qu'ils nécessitent un taux d'échantillonnage élevé. La fréquence d'échantillonnage est ainsi généralement choisie au moins 10 fois supérieure à la fréquence du signal dont on veut mesurer la phase. Or, on souhaite pouvoir utiliser une fréquence d'échantillonnage aussi faible que possible.

Un objet de la présente invention est de prévoir un procédé de mesure de la phase d'un signal sensiblement sinusoïdal qui puisse être mis en oeuvre sous forme d'un circuit numérique simple et de faible surface et pouvant utiliser une fréquence d'échantillonnage peu supérieure à la fréquence maximale du signal.

Selon l'invention, on propose de mesurer la phase d'un signal sinusoïdal en assimilant ce signal à une droite entre deux échantillons situés de part et d'autre de la valeur médiane de ce signal sinusoïdal. Un apport de l'inventeur a été de remarquer que l'erreur commise peut, même si les échantillons sont peu rapprochés, être suffisamment faible pour permettre de déterminer la phase du signal sinusoïdal avec une précision prédéterminée. L'invention propose un procédé pour déterminer la fréquence d'échantillonnage minimale que l'on peut utiliser pour obtenir la précision souhaitée et propose de choisir une fréquence d'échantillonnage proche de ce minimum.

La présente invention propose également un circuit mettant en oeuvre ce procédé.

Plus particulièrement, la présente invention prévoit un procédé pour mesurer avec une erreur maximale E prédéterminée la phase d'un signal sensiblement sinusoïdal de période T variable, de pulsation $\omega = 2\pi/T$, échantillonné avec une période d'échantillonnage T/r, où r est un nombre non nécessairement entier, dans lequel on calcule la phase comme l'instant auquel une droite passant par deux échantillons consécutifs situés de part et d'autre d'une valeur médiane du signal atteint ladite valeur, comprenant l'étape consistant à sélectionner le nombre r dans une fourchette comprise entre une valeur r0 et une valeur égale à deux à trois fois la valeur r0 satisfaisant à la relation suivante pour toutes les valeurs possibles de T, et pour t variant sur la durée d'une période d'échantillonnage, entre -T/r0 et 0 :

$$E \geq \max\left[ t - \frac{T}{r0} \cdot \frac{\mathrm{round}(G \cdot \sin \omega t)}{\mathrm{round}\left(\sin\left[G \cdot \omega \cdot t + \frac{2\pi}{r0}\right]\right) - \mathrm{round}(G \cdot \sin \omega t)} \right]$$

round(x) étant l'entier le plus proche d'un réel x et G étant égal à $2^i G_1$, où i est le nombre de bits sur lequel sont codés les échantillons et où $G_1$ est un terme réel, compris entre 0 et 1, de correction de l'amplitude du signal échantillonné.

Selon un mode de réalisation de la présente invention, le calcul de la phase comprend les étapes consistant à :

a/ déterminer dans quelle moitié de la période d'échantillonnage séparant lesdits échantillons la droite atteint ladite valeur médiane, puis délimiter un intervalle de recherche égal à la moitié de la période ainsi déterminée, le bit de poids fort du nombre binaire étant égal à 0 si l'intervalle de recherche est la première moitié de ladite période et à 1 sinon ; et

b/ répéter un nombre j-1 de fois l'étape consistant à déterminer dans quelle moitié de l'intervalle de recherche la droite atteint ladite valeur, puis restreindre l'intervalle de recherche à ladite moitié d'intervalle, un bit du nombre binaire, de poids inférieur au bit calculé lors de l'étape précédente, étant égal à 0 si la droite atteint ladite valeur dans la première partie de l'intervalle de recherche et à 1 sinon.

La présente invention prévoit également un circuit pour mesurer, sous forme d'un nombre binaire de j bits avec une erreur maximale E prédéterminée, la phase d'un signal sensiblement sinusoïdal de période T variable, de pulsation $\omega = 2\pi/T$, échantillonné avec une période d'échantillonnage T/r, où r est un nombre non nécessairement entier choisi de façon qu'il soit compris dans une plage allant d'une valeur r0 à deux à trois fois cette valeur r0, la valeur r0 satisfaisant à la relation suivante pour toutes les valeurs possibles de T, et pour t variant de la durée d'une période d'échantillonnage, entre -T/r0 et 0 :

$$E \geq \max\left[ t - \frac{T}{r0} \cdot \frac{\mathrm{round}(G \cdot \sin \omega t)}{\mathrm{round}\left(G \cdot \sin\left[\omega \cdot t + \frac{2\pi}{r0}\right]\right) - \mathrm{round}(G \cdot \sin \omega t)} \right]$$

round(x) étant l'entier le plus proche d'un réel x et G étant égal à $2^i G_1$, où i est le nombre de bits sur lequel sont codés les échantillons et où $G_1$ est un terme réel, compris entre 0 et 1, de correction de l'amplitude du signal échantillonné, comprenant :

une cellule d'initialisation recevant ledit signal échantillonné et fournissant, lorsque deux échantillons successifs sont de signes différents, l'inverse de la valeur absolue du premier échantillon sur une première borne de sortie et la somme des valeurs absolues des deux échantillons sur une deuxième borne de sortie ;

une première cellule de calcul ayant des première et deuxième bornes d'entrée respectivement reliées aux première et deuxième bornes de sortie de la cellule d'initialisation, fournissant à une première borne de sortie de la première cellule de calcul la somme de la valeur reçue sur sa première borne d'entrée et de la moitié de la valeur reçue sur sa deuxième borne d'entrée, fournissant ladite moitié à une deuxième borne de sortie de la première cellule de calcul, et fournissant l'inverse du signe de ladite somme à une troisième borne de sortie ; et

un nombre j-1 de cellules de calcul suivantes ayant chacune des première, deuxième et troisième bornes d'entrée respectivement reliées aux première, deuxième et troisième bornes de sortie de la cellule de calcul précédente, fournissant à une première borne de sortie la somme de la valeur reçue sur sa première borne d'entrée et de la moitié de la valeur reçue sur sa deuxième borne d'entrée si sa troisième borne d'entrée reçoit un signal égal à 1 et la somme de la valeur reçue sur sa première borne d'entrée et de l'inverse de la moitié de la valeur reçue sur sa deuxième borne d'entrée sinon, fournissant ladite moitié à une deuxième borne de sortie et l'inverse du signe de ladite somme à une troisième borne de sortie.

Selon un mode de réalisation de la présente invention, la cellule d'initialisation comprend :

une bascule D cadencée par le signal d'horloge, recevant ledit signal échantillonné ;
une porte OU-EXCLUSIF recevant en entrée les signes des valeurs présentes en entrée et en sortie de la bascule D ;
un premier multiplexeur connecté pour fournir soit la sortie de la bascule D soit 0 selon que la sortie de la porte OU-EXCLUSIF est égale à 1 ou 0 et un deuxième multiplexeur connecté pour fournir soit l'entrée de la bascule D soit 0 selon que la sortie de la porte OU-EXCLUSIF est égale à 1 ou à 0, la valeur absolue de la sortie du premier multiplexeur étant fournie à un élément de gain -1 et à une première entrée d'un premier additionneur, la valeur absolue de la sortie du deuxième multiplexeur étant fournie à une deuxième entrée du premier additionneur, les sorties respectives de l'élément de gain -1 et du premier additionneur étant reliées à une première et une deuxième bornes de sortie de la cellule d'initialisation.

Selon un mode de réalisation de la présente invention, la première cellule de calcul comprend :

un diviseur par deux dont une entrée est reliée à la deuxième borne d'entrée de la première cellule de calcul ;
un troisième multiplexeur connecté pour fournir soit la sortie du diviseur soit son inverse selon que le signal reçu par une troisième borne d'entrée de la première cellule de calcul est égale à 1 ou à 0 ;
un deuxième additionneur pour additionner les signaux reçus de la première borne d'entrée de la première cellule de calcul et de la sortie du troisième multiplexeur, la sortie du deuxième additionneur étant reliée à une première borne de sortie de la première cellule de calcul, une deuxième borne de sortie de la première cellule de calcul étant reliée à la sortie du diviseur, l'inverse du signe du signal produit par le deuxième additionneur étant fourni à la troisième borne de sortie de la première cellule de calcul, et la troisième borne d'entrée de la première cellule de calcul étant maintenue à la valeur 1.

Selon un mode de réalisation de la présente invention, les cellules de calcul suivantes ont chacune la même structure que la première cellule de calcul.
Selon un mode de réalisation de la présente invention, les troisièmes bornes de sortie de la première cellule de calcul et des cellules de calcul suivantes fournissent respectivement le bit de poids le plus fort et les bits de poids le plus fort suivants de la phase recherchée.
Selon un mode de réalisation de la présente invention, le nombre i est égal à 8, le nombre j est égal à 4, l'erreur E est égale à un seizième de la période d'échantillonnage et le rapport r est compris entre 3,4 et sensiblement 10.
Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, précédemment décrite, représente schématiquement un dispositif de lecture d'un disque optique ;
la figure 2, précédemment décrite, représente schématiquement un circuit classique de mesure de phase ;
la figure 3 représente une courbe permettant de choisir selon la présente invention une fréquence d'échantillonnage pour mesurer la phase d'un signal sensiblement sinusoïdal ;
les figures 4A à 4D illustrent la mise en oeuvre d'une mesure de phase selon la présente invention ; et
la figure 5 représente un mode de réalisation d'un circuit selon la présente invention.

Pour des raisons de simplicité, on considère par la suite que le signal à analyser est un signal sinusoïdal de période T et de pulsation $\omega = 2\pi/T$ évoluant entre un potentiel positif et un potentiel négatif, atteignant sa valeur médiane Vs = 0 à un instant 0. Après échantillonnage, les échantillons V(t) du signal V échantillonné peuvent s'écrire sous la forme :

$$V(t) = round(G \cdot \sin(\omega t))$$

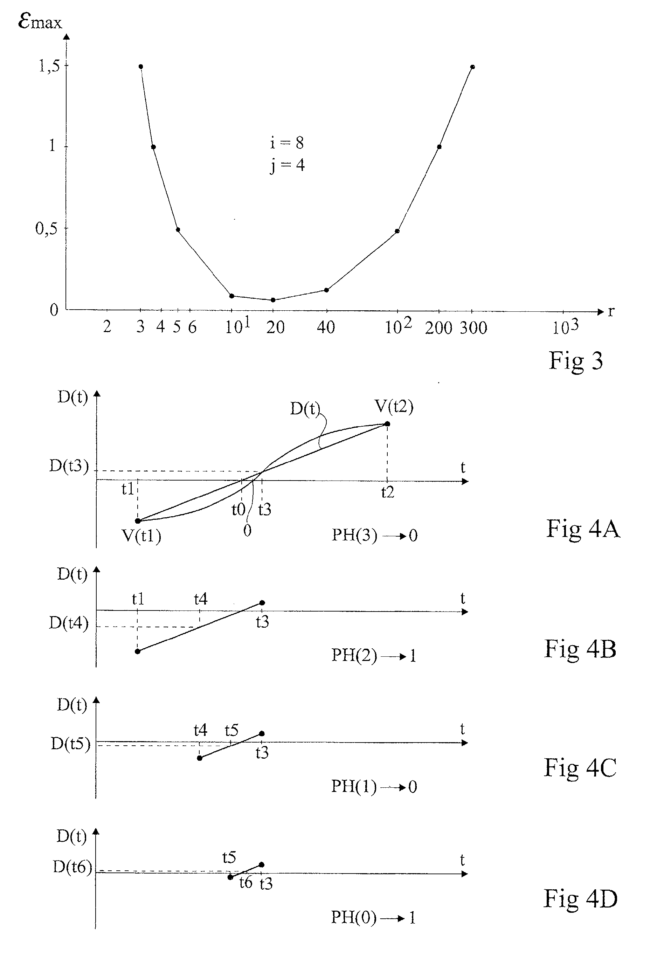

où round(x) est la valeur entière la plus proche d'un réel x, et $G = 2^i G_1$. La valeur i est le nombre de bits sur lequel sont codés les échantillons V(t). $G_1$ est un terme réel, supérieur à 0 et inférieur ou égal à 1, de correction de l'amplitude du signal échantillonné. On considère deux échantillons V(t1), V(t2) consécutifs situés de part et d'autre de la valeur Vs = 0 et distants d'une période d'échantillonnage Te, inférieure d'un rapport r réel non nécessairement entier à la période T. Les échantillons V(t1) et v(t2) sont représentés à la figure 4A, qui est décrite ultérieurement. Si l'on considère une droite D(t) passant par les deux échantillons, on a :

$$D(t) = \frac{r}{T} \cdot (V(t2) - V(t1)) \cdot (t - t1) + V(t1)$$

où t2-t1 = Te = T/r correspond à une période d'échantillonnage. La droite D(t) atteint la valeur 0 en un instant t0 qui peut être différent de l'instant zéro. La valeur t0 correspond à l'erreur $\varepsilon$ commise lorsqu'on assimile le signal sinusoïdal V(t) à la droite D(t). L'inventeur a montré que l'erreur maximale commise est, pour un rapport r prédéterminé entre la fréquence analysée et la fréquence d'échantillonnage, égale à :

$$\varepsilon_{max} = max\left[ t - \frac{T}{r} \cdot \frac{round(G \cdot \sin \omega t)}{round\left( G \cdot \sin\left( \omega t + \frac{2\pi}{n} \right) \right) - round(G \cdot \sin \omega}\right.$$

pour t variant entre -T/r et 0. Une première étape du procédé selon la présente invention consiste à vérifier, pour une période T et un rapport choisi r inférieur à 10, que l'erreur maximale commise $\varepsilon_{max}$ est toujours inférieure à une erreur maximale souhaitée E. On peut montrer que l'erreur maximale commise $\varepsilon_{max}$ reste inchangée lorsque le signal V est déphasé et ne s'annule plus en t = 0. Selon un mode de réalisation de la présente invention, les instants t1, t2 et t0 sont codés sous la forme de nombre binaires de j bits, de telle manière que les instants t0, t1, t2 ainsi que les erreurs E et $\varepsilon_{max}$ sont chacun exprimés par un nombre entier de $2^j_{èmes}$ de la période d'échantillonnage T/r. On considère un tel mode de réalisation dans la suite de la description.

La figure 3 représente une courbe illustrant, lorsque j est fixé à 4 et i à 8, la variation de l'erreur maximale commise $\varepsilon_{max}$, exprimée en 16èmes de la période d'échantillonnage T/r, en fonction du rapport r. Une telle courbe permet de déterminer le rapport r minimum pour lequel on peut réaliser un calcul de phase selon la présente invention.

L'erreur est sensiblement égale à 1,5 lorsque r = 3, à 1 lorsque r = 3,4, à 0,5 lorsque r = 5, à 0,15 lorsque r = 10, à 0,13 lorsque r = 20, à 0,17 lorsque r = 40, à 0,5 lorsque r = 100, à 1 lorsque r = 200 et à 1,5 lorsque r = 300. De manière surprenante, sensiblement à partir de r = 20, l'erreur augmente avec le rapport r alors que théoriquement, r augmentant, les échantillons se rapprochent et le signal V entre deux échantillons devient de plus en plus semblable à une droite. L'inventeur a montré que, lorsque le rapport r augmente, la période d'échantillonnage devenant plus brève, la mesure de l'instant t0 devient plus fine et l'erreur maximale commise $\varepsilon_{max}$ représente une plus grande partie de la période d'échantillonnage. Comme on l'a vu précédemment, on cherche en pratique à déterminer la fréquence d'échantillonnage minimale utilisable pour un signal de fréquence donnée. Pour cela, la présente invention prévoit de rechercher le rapport r minimum utilisable pour une erreur maximale souhaitée E. Si l'on considère un signal V de fréquence variable, la présente invention prévoit de sélectionner une fréquence d'échantillonnage telle que l'erreur maximale commise $\varepsilon_{max}$ reste inférieure à l'erreur maximale souhaitée E pour toutes les valeurs possibles de la fréquence du signal V.

A titre d'exemple, la figure 3 indique que pour une erreur maximale souhaitée de 1, lorsque j est fixé à 4, le rapport r minimum utilisable est de 3,4. Par mesure de sécurité et pour prévenir d'éventuelles dérives des caractéristiques du circuit mettant en oeuvre l'invention, on utilisera un rapport compris entre une et trois fois ce rapport minimum, par exemple entre 4 et 10. Pour un disque optique de format DVD pour une vitesse de lecture de 2,5x, la fréquence maximale Fmax du signal V est égale à 10,9 MHz. On peut selon la présente invention utiliser une fréquence d'échantillonnage Fe minimale de 38 MHz pour mesurer la phase PH du signal V. En pratique, on utilisera une fréquence comprise entre 40 à 100 MHz.

Les figures 4A à 4C illustrent la mise en oeuvre d'une mesure selon la présente invention de la phase PH du signal V sous la forme d'un nombre binaire de quatre bits. On considère deux échantillons consécutifs V(t1) et V(t2) de signes différents pris à deux instants d'échantillonnage t1 et t2. La présente invention prévoit de calculer la phase comme l'instant t0 auquel la droite D(t) passant par les échantillons V(t1) et V(t2) atteint 0. La phase du signal V peut être calculée à partir des valeurs de l'instant t0, de l'instant t1 et de la période d'échantillonnage t2-t1. Pour des raisons de simplicité, on considère par la suite que t1 = 0, que t2 = 1, et que l'instant t0 est égal à la phase PH du signal V.

La figure 4A illustre une première étape consistant à déterminer dans quelle moitié de la période d'échantillonnage séparant les instants t1 et t2, la droite D(t) passant par les échantillons V(t1) et V(t2) atteint 0. On calcule une valeur D(t3) de la droite D(t) à un instant t3 égal à (t2-t1)/2. Si la valeur D(t3) est supérieure à 0, la droite D(t) atteint 0 dans la première moitié de la période d'échantillonnage et le bit de poids fort PH(3) de la phase reçoit la valeur 0. Le calcul sera alors poursuivi sur un intervalle de recherche compris entre les instants t1 et t3. Dans le cas contraire (non illustré), le bit de poids fort PH(3) de la phase reçoit la valeur 1. Le calcul sera alors poursuivi sur un intervalle de recherche compris entre les instants t3 et t2.

La figure 4B illustre une deuxième étape consistant à déterminer dans quelle moitié de l'intervalle de recherche déterminé lors de l'étape précédente la droite D(t) atteint 0. On calcule une valeur D(t4) de la droite D(t) à un instant t4 situé à la moitié de l'intervalle de recherche. Si la valeur D(t4) est supérieure à 0, le deuxième bit de poids fort PH(2) de la phase reçoit la valeur 0 et l'intervalle de recherche est restreint à sa première moitié. Dans le cas contraire, le deuxième bit de poids fort PH(2) de la phase reçoit la valeur 1 et l'intervalle de recherche est restreint à sa seconde moitié.

Les figures 4C et 4D illustrent respectivement des troisième et quatrième étapes ayant chacune le même déroulement que la deuxième étape. On calcule des valeurs D(t5) et D(t6) de la droite D(t) à des instants t5 et t6 situés chacun à la moitié de l'intervalle de recherche déterminé lors de l'étape précédente. Le signe des valeurs D(t5) et D(t6) permet de donner une valeur aux bits PH(1) et PH(0) de la phase PH. Dans l'exemple illustré, on obtient une phase PH = 0101 = 5 signifiant que la droite D(t) a atteint 0 aux 5/16 de la période comprise entre les instants t1 et t2.

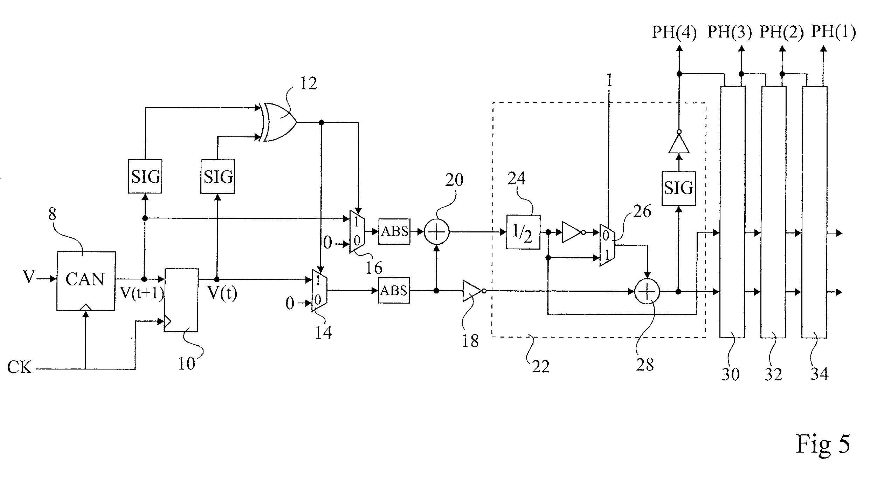

La figure 5 représente schématiquement un mode de réalisation d'un circuit de mesure de phase selon la présente invention. Un convertisseur analogique-numérique 8 sur i bits, externe au circuit, échantillonne le signal V en cadence avec le signal d'horloge CK. La sortie du convertisseur analogique-numérique, codée en binaire signé, est fournie à une bascule D 10 cadencée par le signal d'horloge CK. Deux échantillons consécutifs V(t) et V(t+1) sont ainsi en permanence présents respectivement en sortie et en entrée de la bascule 10. Les signes des échantillons V(t) et V(t+1) sont fournis aux bornes d'entrée d'une porte OU-EXCLUSIF 12. Un multiplexeur 14 reçoit sur une première entrée la valeur 0 et sur une deuxième entrée l'échantillon V(t). Un deuxième multiplexeur 16 reçoit sur une première entrée la valeur 0 et sur une deuxième entrée l'échantillon V(t+1). Les multiplexeurs 14 et 16 sont reliés à la borne de sortie de la porte 12 de manière à fournir en sortie les valeurs V(t) et V(t+1), respectivement, lorsque ces valeurs ont des signes différents, et des valeurs nulles sinon. La valeur absolue de la sortie du multiplexeur 14 est fournie à un élément 18 de gain -1 et à une première borne d'un additionneur 20. La valeur absolue de la sortie du multiplexeur 16 est fournie à une deuxième entrée de l'additionneur 20. Les bornes de sortie respectives de l'élément 18 et de l'additionneur 20 sont reliées à une première et une deuxième borne d'entrée d'une cellule de calcul 22.

La cellule de calcul 22 comprend un diviseur par deux 24 dont la borne d'entrée est reliée à la deuxième borne d'entrée de la cellule de calcul 22. La cellule de calcul 22 comprend en outre un multiplexeur 26 dont une borne de commande est reliée à une troisième borne d'entrée de la cellule de calcul 22, elle-même maintenue à la valeur 1. Une première borne d'entrée du multiplexeur 26 reçoit l'opposée de la sortie du diviseur 24. Une seconde borne d'entrée du multiplexeur 26 reçoit la sortie du diviseur 24. Le multiplexeur 26 fournit en sortie le signal reçu sur sa première borne d'entrée si sa borne de commande est à 0, et le signal reçu sur sa deuxième borne d'entrée sinon. La première borne d'entrée d'un additionneur 28 est reliée à la première borne d'entrée de la cellule de calcul 22 et sa deuxième borne d'entrée est reliée à la borne de sortie du multiplexeur 26. La borne de sortie de l'additionneur 28 est reliée à une première borne de sortie de la cellule de calcul 22. Une deuxième borne de sortie de la cellule de calcul 22 est reliée à la borne de sortie du diviseur 24. L'inverse du signe du signal produit par l'additionneur 28 est fourni à une troisième borne de sortie de la cellule de calcul 22.

Les première, deuxième et troisième bornes de sortie de la cellule de calcul 22 sont respectivement reliées à une première, une deuxième et une troisième bornes d'entrée d'une cellule 30 identique à la cellule 22. De la même manière, une cellule de calcul 32 identique à la cellule 30 est connectée à la suite de la cellule 30, et une cellule de calcul 34 identique à la cellule 32 est connectée à la suite de la cellule 32. Les troisièmes bornes de sortie des cellules 22, 30, 32 et 34 produisent respectivement les bits PH(3), PH(2), PH(1) et PH(0) du signal de phase PH recherché.

La porte OU-EXCLUSIF 12 compare les signes des échantillons successifs V(t) et V(t+1) et déclenche le calcul de la phase PH lorsque ces échantillons sont de signes différents. Les cellules 22, 30, 32 et 34 sont prévues pour fonctionner avec un premier échantillon négatif. Pour prévoir le cas dans lequel le premier échantillon est positif, l'élément 18 de gain -1 fixe arbitrairement la valeur du premier échantillon V(t) à l'inverse de sa valeur absolue. L'additionneur 20 calcule la distance existant entre les échantillons V(t) et V(t+1). Dans la cellule de calcul 22, la moitié de la distance séparant les échantillons est calculée puis elle est ajoutée à la valeur du premier échantillon pour calculer la valeur du milieu de l'intervalle formé par les échantillons V(t) et V(t+1). La valeur intermédiaire ainsi calculée constitue l'extrémité supérieure ou inférieure de l'intervalle de recherche suivant, selon qu'elle est de signe positif ou négatif. Dans chaque cellule de calcul suivante 30, 32 et 34, la moitié de la distance séparant les deux extrémités de l'intervalle de recherche est calculée et ajoutée ou soustraite à la valeur intermédiaire calculée par la cellule précédente. Le signe de la valeur intermédiaire calculée dans la cellule de calcul 22 permet de déterminer la valeur du bit de poids fort de la phase PH recherchée. Chaque cellule de calcul suivante permet d'affiner d'un bit le calcul de la phase PH. L'exemple représenté permet de calculer la phase PH sur quatre bits, mais il suffit pour accroître ce nombre d'ajouter des cellules de calcul à la suite de la cellule 34 représentée.

Le circuit représenté en figure 5 est essentiellement composé d'éléments effectuant des opérations asynchrones et le temps de calcul du circuit représenté en figure 5 peut, dans certaines conditions de fonctionnement, être supérieur à la fréquence du signal d'horloge CK. Une première solution peut consister à accroître la vitesse des composants utilisés pour réaliser le circuit. Une deuxième solution peut consister à séparer le circuit en plusieurs blocs reliés entre eux par des bascules D cadencées par le signal CK. Chaque bascule D mémorise les résultats des calculs effectués par le bloc relié à son entrée lors de chaque période du signal CK, et fournit ces résultats au bloc relié à sa sortie lors de la période suivante. Cette solution allonge le temps de calcul de la phase PH du signal V et elle ne peut donc être utilisée que si la phase PH n'est pas utilisée immédiatement après le passage du signal V par 0. Dans l'exemple d'un lecteur de disque optique, la phase PH du signal V produit par une cellule photosensible de la tête de lecture est utilisée pour produire un signal de correction de position variant très lentement par rapport à la fréquence du signal CK. Il est possible de retarder la mesure de la phase PH de plusieurs périodes de l'horloge CK pour produire un tel signal de correction. On peut par exemple introduire des bascules D cadencées par le signal CK devant chaque borne d'entrée des cellules de calcul 22, 30, 32 et 34 pour garantir un bon fonctionnement du circuit de la figure 5.

Bien entendu, la présente invention est susceptible de diverses variantes et modifications qui apparaîtront à l'homme du métier. A titre d'exemple, la présente invention a été décrite en relation avec un signal sensiblement sinusoïdal V évoluant autour de zéro entre une valeur prédéterminée négative et une valeur prédéterminée positive, mais l'homme du métier adaptera sans difficulté la présente invention à un signal évoluant entre deux valeurs prédéterminées quelconques.

La présente invention a été décrite en relation avec une tête de lecture comportant quatre cellules photosensibles A, B, C et D, mais l'homme du métier adaptera sans difficulté la présente invention à une tête de lecture comportant un nombre supérieur de cellules photosensibles, par exemple six cellules.

**Revendications**

1.    Procédé pour mesurer avec une erreur maximale E prédéterminée la phase (PH) d'un signal sensiblement sinusoïdal (V) de période T variable, de pulsation $\omega = 2\pi/T$, échantillonné avec une période d'échantillonnage T/r, où r est un nombre non nécessairement entier, dans lequel on calcule la phase (PH) comme l'instant auquel une droite (D(t)) passant par deux échantillons consécutifs situés de part et d'autre d'une valeur médiane du signal atteint ladite valeur, **caractérisé en ce qu'**il comprend l'étape consistant à sélectionner le nombre r dans une fourchette comprise entre une valeur r0 et une valeur égale à deux à trois fois la valeur r0 satisfaisant à la relation suivante pour toutes les valeurs possibles de T, et pour t variant sur la durée d'une période d'échantillonnage, entre - T/r0 et 0 :

$$E \geq \max\left[ t - \frac{T}{r0} \cdot \frac{\mathrm{round}\left(G \cdot \sin \omega t\right)}{\mathrm{round}\left(\sin\left[G \cdot \omega \cdot t + \frac{2\pi}{r0}\right]\right) - \mathrm{round}\left(G \cdot \sin \omega t\right)} \right]$$

round(x) étant l'entier le plus proche d'un réel x et G étant égal à $2^i G_1$, où i est le nombre de bits sur lequel sont codés les échantillons et où $G_1$ est un terme réel, compris entre 0 et 1, de correction de l'amplitude du signal échantillonné.

2.    Procédé selon la revendication 1, dans lequel le calcul de la phase comprend les étapes consistant à :

a/ déterminer dans quelle moitié de la période d'échantillonnage séparant lesdits échantillons (V(t), V(t+1)) la droite (D(t)) atteint ladite valeur médiane, puis délimiter un intervalle de recherche égal à la moitié de la période ainsi déterminée, le bit de poids fort du nombre binaire (PH) étant égal à 0 si l'intervalle de recherche est la première moitié de ladite période et à 1 sinon ; et

b/ répéter un nombre j-1 de fois l'étape consistant à déterminer dans quelle moitié de l'intervalle de recherche la droite atteint ladite valeur, puis restreindre l'intervalle de recherche à ladite moitié d'intervalle, un bit du nombre binaire, de poids inférieur au bit calculé lors de l'étape précédente, étant égal à 0 si la droite atteint ladite valeur dans la première partie de l'intervalle de recherche et à 1 sinon.

3. Circuit pour mesurer, sous forme d'un nombre binaire de j bits avec une erreur maximale E prédéterminée, la phase (PH) d'un signal sensiblement sinusoïdal (V) de période T variable, de pulsation $\omega = 2\pi/T$, échantillonné avec une période d'échantillonnage T/r, où r est un nombre non nécessairement entier choisi de façon qu'il soit compris dans une plage allant d'une valeur r0 à deux à trois fois cette valeur r0, la valeur r0 satisfaisant à la relation suivante pour toutes les valeurs possibles de T, et pour t variant de la durée d'une période d'échantillonnage, entre -T/r0 et 0 :

$$E \geq \max\left[t - \frac{T}{r0} \cdot \frac{\text{round}(G \cdot \sin \omega t)}{\text{round}\left(G \cdot \sin\left[\omega \cdot t + \frac{2\pi}{r0}\right]\right) - \text{round}(G \cdot \sin \omega t)}\right]$$

round(x) étant l'entier le plus proche d'un réel x et G étant égal à $2^i G_1$, où i est le nombre de bits sur lequel sont codés les échantillons et où $G_1$ est un terme réel, compris entre 0 et 1, de correction de l'amplitude du signal échantillonné, comprenant :

une cellule d'initialisation recevant ledit signal échantillonné et fournissant, lorsque deux échantillons successifs sont de signes différents, l'inverse de la valeur absolue du premier échantillon sur une première borne de sortie et la somme des valeurs absolues des deux échantillons sur une deuxième borne de sortie ;

une première cellule de calcul (22) ayant des première et deuxième bornes d'entrée respectivement reliées aux première et deuxième bornes de sortie de la cellule d'initialisation, fournissant à une première borne de sortie de la première cellule de calcul la somme de la valeur reçue sur sa première borne d'entrée et de la moitié de la valeur reçue sur sa deuxième borne d'entrée, fournissant ladite moitié à une deuxième borne de sortie de la première cellule de calcul, et fournissant l'inverse du signe de ladite somme à une troisième borne de sortie ; et

un nombre j-1 de cellules de calcul suivantes (30, 32, 34) ayant chacune des première, deuxième et troisième bornes d'entrée respectivement reliées aux première, deuxième et troisième bornes de sortie de la cellule de calcul précédente, fournissant à une première borne de sortie la somme de la valeur reçue sur sa première borne d'entrée et de la moitié de la valeur reçue sur sa deuxième borne d'entrée si sa troisième borne d'entrée reçoit un signal égal à 1 et la somme de la valeur reçue sur sa première borne d'entrée et de l'inverse de la moitié de la valeur reçue sur sa deuxième borne d'entrée sinon, fournissant ladite moitié à une deuxième borne de sortie et l'inverse du signe de ladite somme à une troisième borne de sortie.

4. Circuit selon la revendication 3, dans lequel la cellule d'initialisation comprend :

une bascule D (10) cadencée par le signal d'horloge (CK), recevant ledit signal échantillonné ;

une porte OU-EXCLUSIF (12) recevant en entrée les signes des valeurs (V(t), V(t+1)) présentes en entrée et en sortie de la bascule D (10) ;

un premier multiplexeur (14) connecté pour fournir soit la sortie de la bascule D (10) soit 0 selon que la sortie de la porte OU-EXCLUSIF (12) est égale à 1 ou à 0 et un deuxième multiplexeur (16) connecté pour fournir soit l'entrée de la bascule D (10) soit 0 selon que la sortie de la porte OU-EXCLUSIF (12) est égale à 1 ou à 0, la valeur absolue de la sortie du premier multiplexeur (14) étant fournie à un élément de gain -1 (18) et à une première entrée d'un premier additionneur (20), la valeur absolue de la sortie du deuxième multiplexeur (16) étant fournie à une deuxième entrée du premier additionneur (20), les sorties respectives de l'élément de gain -1 (18) et du premier additionneur (20) étant reliées à une première et une deuxième bornes de sortie de la cellule d'initialisation.

**5.** Circuit selon la revendication 3, dans lequel la première cellule de calcul (22) comprend :

un diviseur par deux (24) dont une entrée est reliée à la deuxième borne d'entrée de la première cellule de calcul (22) ;
un troisième multiplexeur (26) connecté pour fournir soit la sortie du diviseur (24) soit son inverse selon que le signal reçu par une troisième borne d'entrée de la première cellule de calcul (22) est égale à 1 ou à 0 ;
un deuxième additionneur (28) pour additionner les signaux reçus de la première borne d'entrée de la première cellule de calcul (22) et de la sortie du troisième multiplexeur (26), la sortie du deuxième additionneur (28) étant reliée à une première borne de sortie de la première cellule de calcul (22), une deuxième borne de sortie de la première cellule de calcul (22) étant reliée à la sortie du diviseur (24), l'inverse du signe du signal produit par le deuxième additionneur (28) étant fourni à la troisième borne de sortie de la première cellule de calcul (22), et la troisième borne d'entrée de la première cellule de calcul étant maintenue à la valeur 1.

**6.** Circuit selon la revendication 5, dans lequel les cellules de calcul suivantes (30, 32, 34) ont chacune la même structure que la première cellule de calcul.

**7.** Circuit selon la revendication 6, dans lequel les troisièmes bornes de sortie de la première cellule de calcul (22) et des cellules de calcul suivantes (30, 32, 34) fournissent respectivement le bit de poids le plus fort (PH(3)) et les bits de poids le plus fort suivants (PH(2), PH(1), PH(0)) de la phase recherchée (PH).

**8.** Circuit selon l'une quelconque des revendications 3 à 7, dans lequel le nombre i est égal à 8 et le nombre j est égal à 4, dans lequel l'erreur E est égale à un seizième de la période d'échantillonnage, et dans lequel le rapport r est compris entre 3,4 et sensiblement 10.

Fig 1

Fig 2

Fig 3

Fig 4A

Fig 4B

Fig 4C

Fig 4D

EP 1 306 835 A1

Fig 5

**EP 1 306 835 A1**

<table>
<tr><td colspan="2">**Office européen**<br>**des brevets**</td><td>**RAPPORT DE RECHERCHE EUROPEENNE**</td><td>Numéro de la demande<br><br>EP 02 35 4160</td></tr>
</table>

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE    (Int.Cl.7) |
|---|---|---|---|
| A | EP 1 065 662 A (ST MICROELECTRONICS SA)<br>3 janvier 2001 (2001-01-03)<br>* le document en entier *<br>--- | 1-8 | G11B7/09 |
| A | EP 0 241 974 A (PHILIPS NV)<br>21 octobre 1987 (1987-10-21)<br>* abrégé; figure 1 *<br>----- | 1 | |

**DOMAINES TECHNIQUES<br>RECHERCHES   (Int.Cl.7)**

G11B
H04L

Le présent rapport a été établi pour toutes les revendications

| Lieu de la recherche | Date d'achèvement de la recherche | Examinateur |
|---|---|---|
| LA HAYE | 30 janvier 2003 | Annibal, P |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 35 4160

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

30-01-2003

| Document brevet cité au rapport de recherche | | Date de publication | Membre(s) de la famille de brevet(s) | | Date de publication |
|---|---|---|---|---|---|
| EP 1065662 | A | 03-01-2001 | FR | 2796487 A1 | 19-01-2001 |
| | | | EP | 1065662 A1 | 03-01-2001 |
| | | | JP | 2001028132 A | 30-01-2001 |
| EP 0241974 | A | 21-10-1987 | NL | 8600889 A | 02-11-1987 |
| | | | AT | 61179 T | 15-03-1991 |
| | | | DE | 3768127 D1 | 04-04-1991 |
| | | | EP | 0241974 A1 | 21-10-1987 |
| | | | JP | 2089257 C | 02-09-1996 |
| | | | JP | 8007947 B | 29-01-1996 |
| | | | JP | 62243440 A | 23-10-1987 |
| | | | KR | 9600540 B1 | 08-01-1996 |
| | | | US | 4807257 A | 21-02-1989 |

EPO FORM P0460

Pour tout renseignement concernant cette annexe : voir Journal Officiel de l'Office européen des brevets, No.12/82